# EUROPEAN PATENT SPECIFICATION

(11) **EP 0 772 843 B1**
(45) Date of publication and mention of the grant of the patent: **19.05.1999**
(21) Application number: 95925082.0
(22) Date of filing: 03.07.1995
(51) Int. Cl.: G06K 19/18, B42D 15/10, B23H 9/06

(54) **PROCEDURE FOR IDENTIFICATION OF OBJECTS BASED ON FORMING AND VERIFYING THEIR SURFACE ROUGHNESS AS WELL AS OBJECTS SUITABLE TO BE IDENTIFIED**
IDENTIFIZIERUNGSVERFAHREN VON GEGENSTÄNDEN, WOBEI IHRE OBERFLÄCHE RAUH GEMACHT WIRD UND DIESE RAUHHEIT ÜBERPRÜFT WIRD UND DAFÜR GEEIGNETE GEGENSTÄNDE
PROCEDE D'IDENTIFICATION D'OBJETS CONSISTANT A RENDRE LEUR SURFACE RUGUEUSE ET A CONTROLER LEUR RUGOSITE DE SURFACE, ET OBJETS APTES A ETRE IDENTIFIES

(30) Priority: 25.07.1994 HU 9402179
(43) Date of publication of application: 14.05.1997
(73) Proprietor: Pikler, Lajos, 2040 Budaörs (HU)
(72) Inventor: PIKLER, Lajos, H-2040 Budaörs (HU); JESZENSZKY, Gyula, H-2040 Budaörs (HU); DOMBI, János, H-2040 Budaörs (HU)
(74) Representative: Beetz & Partner Patentanwälte
(86) International application number: HU9500032
(87) International publication number: WO9603714

(56) References cited:
- EP-A- 0 252 842
- EP-A- 0 322 301
- WO-A-91/14217
- BE-A- 837 814
- CH-A- 652 058

## Description

The invention relates to a method for identification of objects and an object therefor.

A number of various technical solutions used for protection against any counterfeit of objects, especially locking labels used for sealing the package of goods, furthermore, bar codes, bank notes, credit cards, official documents, certificates, deeds, transport vouchers, lead seals, machines such as traffic means, military means and objects have existed for long time. However, the solutions that become known represent effective protection only until the counterfeiters having more advanced technology make the markings serving for protection repeatable and make the secret safety codes suitable to be detected and copied.

The literature of patents describes several solutions in which markings hidden by using various methods are placed on the surface of objects. For example, the patent specification of registration No. US 4.988.126 describes a method for additional marking of embossed documents, by using luminescent compositions arranged in the high/convex and/or low concave zones, thus giving the relief print a stereoscopic reflection feature which can be verified by both visual inspection and using an appropriate device. This enables the data included in the document to be verified in a simple way, in respect of both alteration and counterfeit. This solution requires a special marking that, in any case, shall be adapted to the content of document: in addition, it call only be used for documents.

W091/14217 and EP-A-0 252 842 are concerned with respective processes for making embossing punches for the manufacture of watermarked paper. In W091/14217, the values of an image are put into numeric form and subsequently converted into a continuous surface. The level curves of said surface are plotted to provide a continuous engraving path. In EP-A-0 252 842, the values of an black and white image are recorded according to the grey levels of its pixels and are automatically engraved by using an electrode, the depth of the engraving being directly related to the respective grey levels.

EP-A-0 322 301 and BE-A-0 837 841 are concerned with the manufacturing of engravings in steel elements. In particular, EP-A-0 322 301 deals with the manufacturing of smoothcut printing elements by forming from an image engraved in copper a negative copy in copper and using said copy as an electrode to engrave said image on a steel element by electric erosion. In BE-A-0 837 841 the image on said electrode is produced by using photoengraving technique.

CH-A-0 652 058 deals with an apparatus for producing electrical discharges for cutting metal.

Object of the present invention is to provide a solution suitable to prevent any counterfeit or make it detectable, which can universally be used for various objects and can be implemented by using relatively simple technology, while making any copy for the purpose of counterfeit impossible even having the conditions of its implementation became known.

The object is solved by providing a method according to claims 1 and 5 and an object according to claim 10.

Advantageous embodiments are claimed in the subclaims.

One of the principles of the invention is based on the recognition that, if the 3-D marking that represents some roughness on the surface consists of elementary formations of chaotic arrangement produced by means of a stochastic process, the marking thus produced is unable to be reproduced with full identity.

Consequently, if a marking of such kind is produced by means of a stochastic process on the surface of some object, this marking in itself is suitable to mark that object in a distinct manner. In this case, the object may be the object itself to be protected against any counterfeit, or even, a print matrice that can be used to provide surface markings in a documented manner on various objects to be protected against any counterfeit. Markings of this kind can be obtained by exposing an urea to stochastic effects of electro-erosion.

In this case the electro-erosion is defined as a permanent alteration of some surface by means of particles with electric charge; while the stochastic electro-erosion consists of all electro-erosion process in which the mutual effect between the surface and the particles is controlled by random events.

According to a further recognition, the stochastic effects manifest themselves to the largest extent in all electric arc, in which the concentrated very high-energy effect of the electric flash-over of duration less than one nanosecond virtually tears out a chip from the surface. This phenomenon occurs e.g. when opening electric contacts; however, according to a further realization, its practical implementation can the most closely be approached by the electro-erosion procedure.

According to a further realization, an object provided with some marking can be identified any time, based on the establishment and storage of the picture and/or the code of marking. The simplest way of establishing the picture consists in the use of a video-camera where the video-code can simply be used as the code of marking. The verification can be performed e.g. in an on-line manner known in itself.

According to another aspect of the present invention the identification of objects is based on forming and verifying its surface roughness, in which a marking that makes its surface rough will be produced on the object and the picture and/or the code of the marking, preferably together with other identification data of the object, will be stored in the storage of a computer and/or on a portable storage means and, when identifying the picture and/or the code of the marking placed on the object will be compared to those that stored, based on that the 3-dimension marking containing the elementary formations of roughness in a chaotic arrangement will be produced by means of a printing surface processed by using stochastic electro-erosion and/or by means of stochastic electro-erosion.

According to a further criterion, electro-erosion equipment will be used to implement the procedure of electro-erosion.

According to another aspect of the invention the parameters of the electro-erosion equipment will be set as follows idle voltage is 60 to 100 V, peak current: 6 to 25 A; pulse width: 50 to 800 µs: break between pulses: 10 to 800 µs.

Any of or all the adjustable parameters of the electro-erosion equipment will be controlled by means of a generator. Random- or quasi-random generator is used as the generator

According to another aspect the marking will be produced on a print matrice. The marking prepared on the print matrice will be printed if necessary on paper, metal sheet, metal strip and/or plastic sheet containing other items of information and the print will be covered by some transparent material if necessary

A further aspect is that the picture of marking will be produced with the marked object being in its proper state, thus, with packages sealed and component parts built in.
The picture and/or the code of marking will be produced by using video record and/or autotrophic- and or parametric optics. The picture and/or the code of marking will be produced by using an optical interferometer.

If the difference between the code of marking produced last by means of the print matrice and the code of previous marking exceeds the applied tolerances, the print matrice will be replaced or the changes in the code documented. The printing surface containing the marking will be reprocessed when renewing the print matrice.

Furthermore, according to an aspect of the present invention an object suitable to be identified is provided with a marking produced by means of physical- and/or chemical way on its optically accessible surface, designed in a manner that the elementary formations of the surface roughness are of chaotic arrangement.

A further criterion of the object is that the marking contains elevations, craters, hollows and channels established from the elementary formations of surface roughness in a chaotic arrangement. The size of the elementary formations of surface roughness lies between 0.1 and 30 µm.

A significant advantage of the present invention is, that it can be equally applied to the surface of various objects in order to detect and prevent any counterfeit, and the marking itself, its picture and/or code can be produced, stored and identified in a simple and reliable manner.

A further advantage of the invention is that, if a counterfeiter were able to localize the marking and determine the code used for the identification, the technical solutions available at present would still be unable to produce an accurate copy of the marking. In fact, this would require the control of electro-erosion processes with response times shorter than one nanosecond. The imitation of the chaotic arrangement can also be verified and detected by forming and analyzing distribution functions. Should, however, an attempt be made to counterfeit by using e.g. micro-laser technology, the melting traces characterizing this procedure remained on the surface could easily be detected. In addition, the micro-laser technology is unable to produce patterns below 10 µm resolution on metallic surfaces at present.

The production of print matrices according to the invention and their use for marking are suitable to put individual marks not only on packaged goods, but also on bank notes, credit cards, official documents, certificates, deeds, transport bills and metallic seals in a manner that they will become unable to be counterfeited. In addition. they can also be used to put marks on metallic strips inserted in certain securities. The markings can also be documented in an up-to-date manner, thus making the objects thus marked suitable to be identified by using various methods, even immediately if so required.

A further advantage is, that the effect of the electric arc of stochastic character already in itself can be further increased, by controlling any of or all the controllable parameters of the electro-erosion equipment by means of a -- preferably, random- or quasi random -- generator.

This solution has the further advantage that the characteristic size of the elementary tbrmations can be reduced to as small as 0.1 µm, which also enables the markings to be hidden virtually on very fine surfaces. In such cases, however, ultraviolet optical systems or an optical interferometer or other optical methods will be needed to establish the picture.

The further advantages and application possibilities of the invention will be presented by means of examples. However, it shall be noted that there are a number of application possibilities beyond those described by the examples.

### Example 1:

A print matrice to be used for additional marking will be produced, in order to detect any counterfeit of locking labels used for sealing packaged goods. The print matrice will be made of steel of K1 quality, hardened to HRC-60, designed as a cylinder of 8 mm diameter, with the marking placed on one of the end plates. The operational parameters of the electro-erosion equipment will be set as follows:
- idle voltage: 60 to 100 V, preferably 80 V;
- peak current: 6 to 25 A:
- pulse width: 50 to 800 µs;
- break between pulses: 50 to 800 µs.

In this case, the above mentioned parameters of the electro-erosion equipment can be set in three to five rough stages, with the possibility of fine adjustment within each stage. Any of the parameters will be controlled by means of a random- or quasi-random generator, the output of which controls the rough stages of the given parameter. Fuel oil, petroleum, transformer oil, kerosene or any SOE oil derivative or their mixture can be used as a dielectric for the electro-erosion procedure.

The electro-erosion procedure shall take 1 to 20 minutes. The finished printing surface contains elevations, craters, hollows and channels in a random arrangement. The printing surface obtained will be marked **A**.

Then, another printing surface with the same conditions will be produced on the same- print matrice, which will be marked **B**.

By using the print matrices, the metallic insert sheet of the locking labels provided with printed text will be marked and, then, the metal sheet will be covered with plastic sheet in a known manner and, finally, the locking labels will be placed in a known manner on the packaging of goods.

In the next step, the picture of the marks A and B placed on the locking labels will be obtained, by means of a video recorder. The digitized video pictures represent the video codes A and B. respectively, which will be stored in a computer. Any other characteristics of the given serie of goods can also be stored in the same storage area.

When identifying the given product, the video picture and the video code of the mark placed on the blocking label will be prepared and compared in a known manner with the video code stored in the computer.

The results of the example 1 are presented by the figures listed below:
Fig. 1 shows the video picture A
Fig. 2 shows the video picture B
Fig. 3 shows the video code A
Fig. 4 shows the video code B.

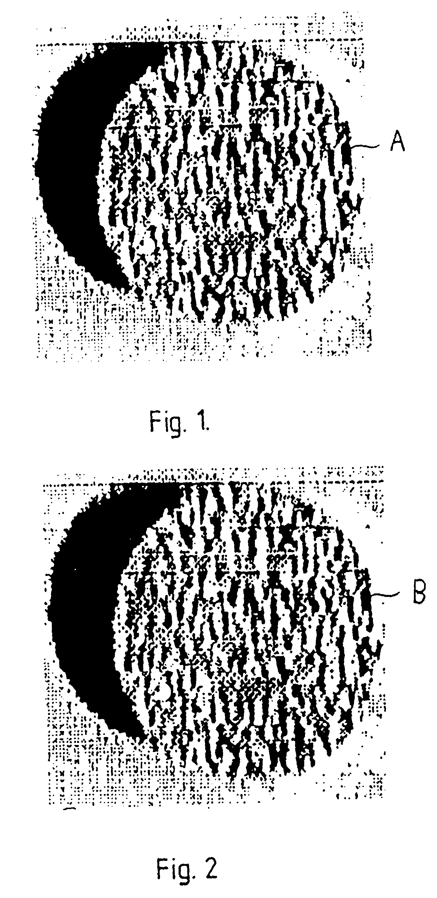

The Figs. 1 and 2 show the video pictures in a tenfold magnification. In our case, no deviations are visible to the naked eye. However, as stochastic processes take place during the electro-erosion, it is also possible that differences visible to the naked eye can be observed when repeating the operations described in this example.

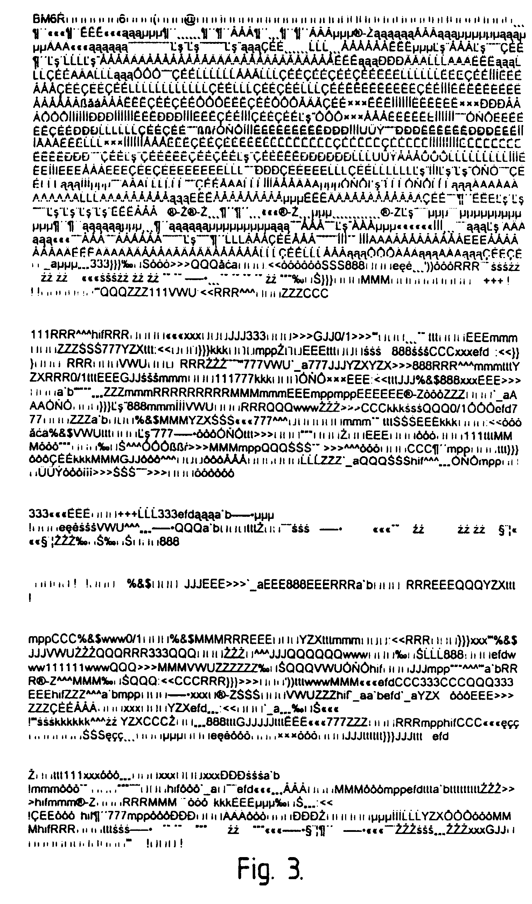

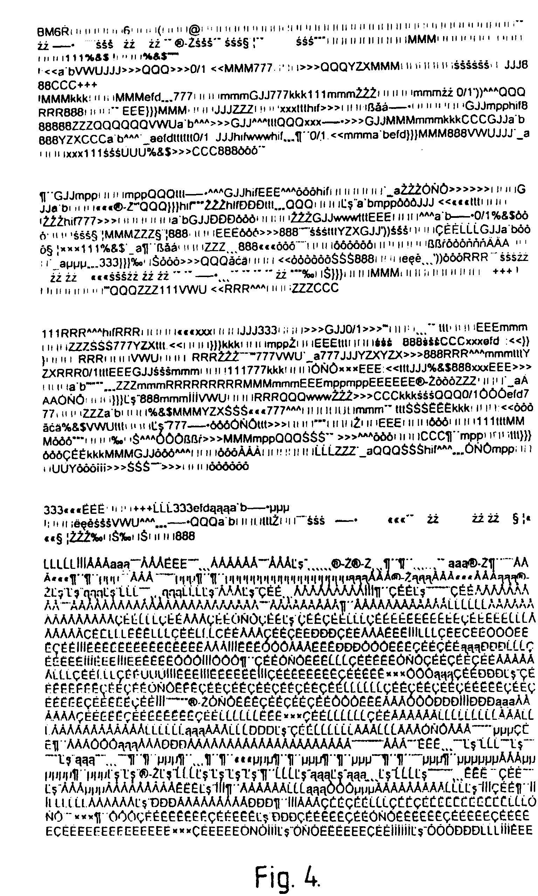

The video codes shown in the Figures 3 and 4 are different even in our case; thus, the unable the locking labels marked by using the printing surfaces A and B and any other objects, respectively, to be distinguished.

Should any of the print matrices in use be worn out, its video code will suffer some changes. By documenting the changes, the print matrice remains suitable for further use, with a new surface prepared by means of electro-erosion in place of the worn surface, represented by a new video code, or even, the old print matrice can be replaced by a new one, represented by a new video code. With proper documentation, this is not considered a disadvantage; instead, it causes further difficulties to counterfeiters.

### Example 2:

A motor car component part will be marked in the manner described in the Example 1. For this purpose, a component part to be built-in and made in mass production or an accessible surface of some component part already built in a motor car in use can be used.

The video code of the marking will be established and stored in a computer, together with other ID data of the motor car.

Several parts of a motor car will be marked and their video codes together with other ID data of the motor car will be stored either on magnet card as a completion to the traffic license and/or in a storage chip. The identification will be performed in a known manner.

In addition to the description of an exemplary implementation of the procedure according to the invention, the Example 1 also shows that the printing surfaces will not be the same even under the same conditions for producing the print matrices. Indeed, the probability of obtaining the same optic pictures for the surfaces both A and B will be 10⁻¹⁹ or less. It is also proved that the markings printed on metal sheets can be identified by using simple video technique and by comparing their video codes by means of a computer.

The method described in the Example 2 is suitable to provide the surfaces on conductible, metallic parts of machines such as traffic means, military equipment and objects etc. with individual markings that are unable to be copied and counterfeited. Furthermore, it also enables the markings to be properly documented, thus making the objects marked suitable to be identified by using various methods even immediately if so required.

In the above examples, the average roughness of the markings will be around 10 µm. The size of formations varies between 0.4 to 15 µ m and can be controlled by the material of the part and/or the electrode and/or the dielectric. and/or the parameters of the electro-erosion equipment. By reducing the pulse width and/or pulse break below 50 µs, preferably between 10 and 50 µs, and/or by reducing the peak current below 6 A. preferably between 2 and 6 A. the lower limit size of formations can be reduced below 0.4 µm. Thus, the space requirement of the marking can also be reduced, which makes the detection by third persons more difficult. In such cases. the picture and/or the code cannot be produced any more by means of video technique operating in the frequency range of visible light; however, by using an ultraviolet camera and/or other mapping methods e.g. optical interferometer and/or autotrophic and/or parametric optic, this problem can be solved.

### Example 3

By using the technique described above, webs of keys for locks were marked. In the locking device itself, an optic reader subassembly suitable to identity stochastic patterns created by electro-erosion as well as a microprocessor-based unit of identification were arranged.

When the key is inserted into the lock, the optic reader subassembly reads the identifier marking established on the web of the key, while activating the unit of identification which, based on its own programmed algorithm, compares the pattern previously stored to the pattern read by the optic reader. If the two patterns are identical, that is, their digitized sequences coincide, the locking device will be opened, otherwise it remains locked.

In addition to electro-erosion equipment, other procedures of stochastic electro-erosion can also be used to produce markings, e.g. by opening electric contacts and/or pulses of amplitude exceeding the flash-over voltage, or by means of procedures that take place e.g. in an electric plasma. However, it is well known that these phenomena that are disadvantageous in respect of electrotechique led to the practical implementation of the electro-erosion technology. The process of electro-erosion can also be evoked in an electro-chemical way; nevertheless, its stochastic character can only be ensured by means of special procedures.

Furthermore, it shall be noted that, in addition to the stochastic electro-erosion, the markings of chaotic arrangement according to the present invention can also be produced by means of other physical or chemical procedures, e.g. by chemical corrosion and/or grinding.

The marking included in the print matrice can be printed on various materials, such as paper, metal sheet, metal strip, plastic sheet; furthermore, the print can be protected against any counterfeit by covering it with some transparent material in a known manner if required.

It is advantageous to produce the picture and/or the code of marking with the marked object being in its proper operational state and place, e.g. component parts built in or packages sealed. In fact, it is under such circumstances that the possibility of obtaining the same results will be the highest when producing pictures and/or codes repeatedly.

Further advantages will be achieved if the quality of print matrice can be monitored on the basis of possible changes in the code of marking printed by that print matrice, Thus, if the code of the marking printed last shows differences beyond the permissible tolerances as compared to the code of marking printed second last, this means that the print matrice became worn. In this case, the new code can be documented or the print matrice can be renewed or a new print matrice can be used. Worn print matrices can also be renewed by reprocessing the printing surface containing the marking e.g. by using electro-erosion.

## Claims

1. Method for the identification of an object based on forming and verifying its surface roughness, comprising the steps of
producing a 3-dimensional marking on the object that makes its surface rough (A, B),
obtaining recognition data of said produced 3 dimensional marking (A, B),
storing the obtained recognition data of said three dimensional marking (A, B) in a storage means,
comparing the recognition data of a marking on an object to said stored recognition data, characterized in that
the elementary formations of the surface roughness of the 3-dimensional marking (A, B) are in a chaotic arrangement.

2. Method for identification of an object according to claim 1, wherein said 3-dimensional marking (A, B) is established by means of a stochastic electro erosion process.

3. Method for identification of an object according to claim 2, further comprising the step of setting adjustable process parameters of the stochastic electro erosion process as follows: idle voltage = 60 to 100 V, peak current = 6 to 25 A, pulse width = 50 to 800 µs, and break between pulses = 10 to 800 µs.

4. Method for identification of an object according to claim 3 further comprising the step of
randomly controlling the adjustable process parameters by means of a random or quasi random generator.

5. Method for the identification of an object based on forming and verifying its surface roughness, comprising the steps of
producing a 3-dimensional marking on the object that makes its surface rough (A, B),
obtaining recognition data of said produced 3 dimensional marking (A, B),
storing the obtained recognition data of said three dimensional marking (A, B) in a storage means,
comparing the recognition data of a marking on an object to said stored recognition data, characterized in the step of establishing by means of a print matrice said three dimensional marking wherein the elementary formations of the surface roughness of the 3-dimensional marking (A, B) are in a chaotic arrangement

6. Method for identification of an object according to claim 5, characterized in that said 3 dimensional marking (A, B) prepared on the print matrice will be printed if necessary on paper, metal sheet, metal strip or plastic sheet containing other items of information and the print will be covered by transparent material if necessary.

7. Method for identification of an object acording to claims 1 to 6, chatacterized in that the code of said 3 dimensional marking (A, B) will be produced using video record or autotrophic or parametric optics.

8. Method for identification of an object according to claims 1 to 7, characterized in that the code of said 3 dimensional marking (A, B) will be produced by using an optical interferometer.

9. Method for identification of an object according to claims 4 or 5, characterized in that, if the difference between the code of said three dimensional marking (A, B) produced last by means of the print matrice and the code of previous marking (A, B) exceeds the applied tolerances the print matrice will be changed or the changes in the code documented.

10. An object having a surface suitable for identification based on forming and verifying its surface roughness which has a three dimensional marking (A, B) on its optically accessible surface, which three dimensional marking (A, B) alters the surface roughness of the object and was produced by a physical and/or chemical process characterized in that the elementary formations of the the surface roughness of said three dimensional marking (A, B) are in a chaotic arrangement.

11. Object as in claim 10, characterized in that the size of the elementary formations of surface roughness lies between 0.1 and 30 µm.

## Patentansprüche

1. Verfahren zur Identifikation eines Objekts auf Grund der Ausgestaltung und Überprüfung seiner Oberflächenrauhigkeit, mit den Verfahrensstufen:
Herstellen einer 3-dimensionalen Markierung (A, B) auf dem Objekt, welche seine Oberfläche aufrauht,
Aufnehmen von Erkennungsdaten der erzeugten 3-dimensionalen Markierung (A, B),
Speichern der aufgenommenen Erkennungsdaten der 3-dimensionalen Markierung (A, B) in einem Speichergerät,
Vergleichen der Erkennungsdaten einer Markierung auf einem Objekt mit den gespeicherten Erkennungsdaten, dadurch gekennzeichnet, daß
die elementaren Formationen der Oberflächenrauhigkeit der 3-dimensionalen Markierung (A, B) in chaotischer Anordnung sind.

2. Verfahren zur Identifikation eines Objekts nach Anspruch 1, bei welchem die 3-dimensionale Markierung (A, B) durch stochastische Elektro-Erosion hergestellt wird.

3. Verfahren zur Identifikation eines Objekts nach Anspruch 2, mit dem weiteren Schritt einer Einstellung von einstellbaren Verfahrensparametern der stochastischen Elektro-Erosion Blind: Spannung = 60 bis 100 V, Spitzenwerte des Stroms = 6 bis 25 A, Impulsbreite = 50 bis 800 µs und Pause zwischen den Impulsen = 10 bis 800 µs.

4. Verfahren zur Identifikation eines Objekts nach Anspruch 3, mit dem weiteren Schritt der Zufallskontrolle der einstellbaren Verfahrensparameter mit Hilfe eines Zufalls- oder Quasi-Zufallsgenerators.

5. Verfahren zur Identifikation eines Objekts auf Grund der Ausgestaltung und Überprüfung seiner Oberfläche mit den Verfahrensstufen:
Herstellen einer 3-dimensionalen Markierung auf dem Objekt, welche seine Oberfläche aufrauht,
Aufnehmen von Erkennungsdaten der hergestellten 3-dimensionalen Markierung (A, B),
Speichern der aufgenommenen Erkennungsdaten der hergestellten 3-dimensionalen Markierung (A, B) in einem Speichergerät,
Vergleichen der Erkennungsdaten einer Markierung auf einem Objekt mit den gespeicherten Daten dadurch gekennzeichnet, daß
die 3-dimensionale Markierung einer Druckplatte erstellt wird, wobei die elementaren Formationen, die die Oberflächenrauhigkeit der 3-dimensionalen Markierung (A, B) aufbauen, in chaotischer Anordnung sind.

6. Verfahren zur Identifikation eines Objekts nach Anspruch 5,
dadurch gekennzeichnet, daß
die auf der Druckplatte erstellte 3-dimensionale Markierung (A, B) gegebenenfalls auf Papier, Metallplatte, Metallstreifen oder Kunststoffplatte gedruckt wird, welche auch andere Informationen beinhalten können, und der Druck gegebenenfalls mit durchsichtigem Material abgedeckt wird.

7. Verfahren zur Identifikation eines Objekts nach Anspruch 1 bis 6,
dadurch gekennzeichnet, daß
der Kode der 3-dimensionalen Markierung (A, B) mit einem Videorecorder oder einer autotrophischen oder parametrischen Optik erstellt wird.

8. Verfahren zur Identifikation eines Objekts nach Anspruch 1 bis 7,
dadurch gekennzeichnet, daß
der Kode der 3-dimensionalen Markierung (A, B) mit einem optischen Interferometer erstellt wird.

9. Verfahren zur Identifikation eines Objekts nach Anspruch 4 oder 5,
dadurch gekennzeichnet, daß
falls der Unterschied zwischen dem zuletzt mit der Druckplatte hergestellten Kode der 3-dimensionalen Markierung (A, B) und dem Kode der vorherigen Markierung (A, B) die verwendeten Grenzwerte überschreitet, die Druckplatte gewechselt wird oder die Änderungen im Kode dokumentiert werden.

10. Gegenstand mit einer zur Identifikation geeigneten Oberfläche, der auf seiner optisch erreichbaren Oberfläche eine 3-dimensionale Markierung (A, B) hat, welche mittels eines physischen und/oder chemischen Verfahrens hergestellt worden ist und die Oberflächenrauhigkeit des Gegenstands verändert,
dadurch gekennzeichnet, daß
die elementaren Formationen der Oberflächenrauhigkeit dieser 3-dimensionalen Markierung (A, b) in chaotischer Anordnung sind.

11. Gegenstand nach Anspruch 10,
dadurch gekennzeichnet, daß
die Größe der elementaren Formationen der Oberflächenrauhigkeit zwischen 0,1 µm und 30 µm liegt.

## Revendications

1. Procédé pour l'identification d'un objet basé sur la formation et le contrôle de sa rugosité superficielle, comprenant les étapes suivantes:
- réalisation d'un marquage tridimensionnel (A, B) sur l'objet rendant sa surface rugueuse,
- obtention de données de reconnaissance dudit marquage tridimensionnel (A, B) produit,
- stockage dans un moyen de stockage des données de reconnaissance obtenus dudit marquage tridimensionnel (A, B),
- comparaison des données de reconnaissance d'un marquage sur un objet aux les données de reconnaissance stockées,
caractérisé en ce que
les formations élémentaires de la rugosité superficielle du marquage tridimensionnel (A, B) ont une disposition chaotique.

2. Procédé pour l'identification d'un objet selon la revendication 1, dans lequel le marquage (A, B) est établi au moyen d'un processus d'électroérosion stochastique.

3. Procédé pour l'identification d'un objet selon la revendication 2, comprenant en outre l'étape de l'ajustage de paramètres de processus ajustables dudit processus d'électroérosion stochastique comme suit: tension sans charge: 60 à 100 V, courant de pointe: 6 à 25 A, plage d'impulsions: 50 à 800 µs, pause entre impulsions: 10 à 800 µs.

4. Procédé pour l'identification d'un objet selon la revendication 3, comprenant en outre l'étape de contrôle aléatoire des paramètres de processus ajustables à l'aide d'un générateur aléatoire ou quasi-aléatoire.

5. Procédé pour l'identification d'un objet basé sur la formation et le contrôle de sa rugosité superficielle, comprenant les étapes suivantes:
- réalisation d'un marquage tridimensionnel (A, B) sur l'objet rendant sa surface rugueuse,
- obtention de données de reconnaissance dudit marquage tridimensionnel (A, B) produit,
- stockage dans un moyen de stockage des données de reconnaissance obtenus dudit marquage tridimensionnel (A, B),
- comparaison des données de reconnaissance d'un marquage sur un objet aux données de reconnaissance stockées, caractérisé par l'étape de réalisation dudit marquage tridimensionnel à l'aide d'une matrice d'impression, les formations élémentaires de la rugosité superficielle du marquage tridimensionnel (A, B) ayant une disposition chaotique.

6. Procédé pour l'identification d'un objet selon la revendication 5, caractérisé en ce que ledit marquage tridimensionnel (A, B) préparé sur la matrice d'impression sera imprimé, si nécessaire, sur du papier, sur une plaque métallique, sur une bande métallique ou sur une feuille plastique contenant d'autres informations, et que, si nécessaire, l'impression sera recouverte par un matériau transparent.

7. Procédé pour l'identification d'un objet selon les revendications 1 à 6, caractérisé en ce que le code dudit marquage tridimensionnel (A, B) sera produit en utilisant un enregistrement vidéo ou des optiques autotrophiques ou paramétriques.

8. Procédé pour l'identification d'un objet selon les revendications 1 à 7, caractérisé en ce que le code dudit marquage tridimensionnel (A, B) sera produit en utilisant un interféromètre optique.

9. Procédé pour l'identification d'un objet selon les revendications 4 ou 5, caractérisé en ce que, si la différence entre le code dudit marquage tridimensionnel (A, B) produit en dernier lieu à l'aide de la matrice d'impression et le code d'un marquage antérieur (A, B) dépasse les tolérances prévues, la matrice d'impression sera remplacée ou les changements dans le code seront documentés.

10. Objet ayant une surface apte à être identifiée qui comprend une marquage tridimensionnel (A, B) sur sa surface optiquement accessible, ledit marquage tridimensionnel (A, B) modifiant la rugosité superficielle de l'objet et ayant été produit par un processus physique et/ou chimique, caractérisé en ce que les formations élémentaires de la rugosité superficielle dudit marquage tridimensionnel (A, B) ont une disposition chaotique.

11. Objet selon la revendication 10, caractérisé en ce que la taille des formations élémentaires se trouve entre 0,1 et 30 µm.
